# EUROPEAN PATENT APPLICATION

(11) **EP 0 884 573 A2**
(43) Date of publication of application: **16.12.1998**
(21) Application number: 98303382.0
(22) Date of filing: 30.04.1998
(51) Int. Cl.: G01M 3/28

(54) **Fluid detection device**

(30) Priority: 11.06.1997 GB 9712072
(71) Applicant: The BOC Group plc, Windlesham Surrey GU20 6HJ (GB)
(72) Inventor: Worsfold, Jonathan Peter, Horsham, Sussex, RH13 5PD (GB)
(74) Representative: Gough, Peter

(57) **Abstract**

A device 10 for detecting gas leaks comprises a housing 12 having an inlet 16 and an outlet 18. Located in the housing 12 between the inlet 16 and the outlet 18 is a valve member 20 which is movable between a first position in which gas can pass from the inlet 16 towards the outlet 18 and a second position in which the gas is diverted through a flowmeter 28 mounted on the housing 12 before reaching the outlet 18.

## Description

The present invention relates to devices for detecting fluid leaks and in particular gas leaks.

As is well known, a flame is produced when welding and cutting metals and various other materials when, for example, acetylene and oxygen are burnt together in preselected ratios. Sometimes welding and cutting operations have to be undertaken in confined spaces. This can lead, where an operator is careless or the oxyfuel torch is faulty, to an enrichment of the environment around the torch with oxygen. This is very dangerous and operators have been injured as a consequence of explosions and fires caused by the inadvertent oxygen enrichment of the atmosphere around the oxyfuel torch.

US Patent 5269171 describes an apparatus for testing for a gas leak in a gas service installation which includes a test adapter permanently installed in the gas line and a flowmeter removably connected to the adapter. Means is provided for by-passing gas through the flowmeter to test for a gas leak which exceeds a predetermined amount.

It is an aim of the present invention to provide a simple device which is economic to make and use for detecting fluid leaks and in particular gas leaks which will minimise the possibility of the inadvertent enrichment of the environment around an end user apparatus for example an oxyfuel torch with said fluid or gas.

According to one aspect of the present invention, a device for detecting fluid leaks, comprises a housing having an inlet adapted for attachment to a first fluid line and an outlet adapted for attachment to a second fluid line which is, characterised in that a valve member is located in the housing between the inlet and the outlet and movable between a first position in which the fluid can pass from the inlet through the valve member and towards the outlet and a second position in which the fluid when flowing through the inlet is diverted through a flowmeter before reaching the outlet.

In a preferred embodiment, the valve member is in the form of a sphere having a main through bore which in the first position is aligned with the inlet and the outlet and a second bore which in the second position allows communication between the inlet and the main through bore which is then aligned with an inlet to the flow meter.

In a second aspect of the present invention, a gas supply arrangement includes a source of gas, a pipeline from said source to an end user device and a fluid leak detection device as hereinbefore defined located in said pipeline.

An embodiment of the invention will now be described by way of example reference being made to the Figures of the accompanying diagrammatic drawings in which:-
Figure 1 is a schematic plan view of pipelines connecting a source of gas to a plurality of end user devices;
Figure 2 is a perspective view of a device for detecting fluid leaks; and
Figure 3 is a section through the device of Figure 2.

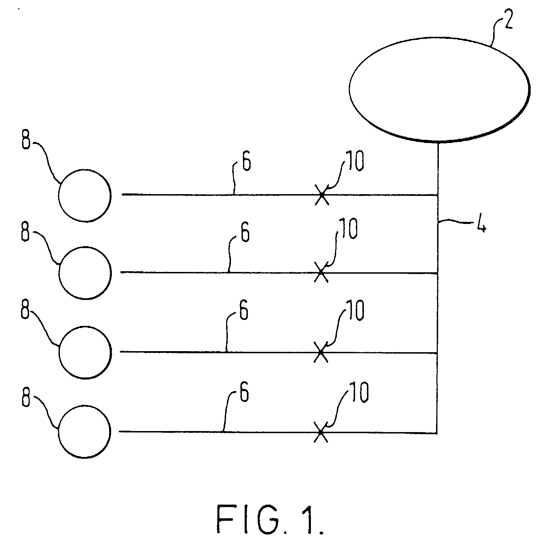

As shown in Figure 1, a pressure vessel 2 containing a gas, for example, oxygen under pressure is connected by a main pipeline 4 and branch pipelines 6 with end user devices, for example, a plurality of welding or cutting torches 8. Usually, each torch 8 is provided with a valve which can be closed to prevent the flow of oxygen to the torch when said torch is not in use. However, sometimes an operator will forget to close the valve or the valve may leak with a consequent continuous discharge of oxygen from the torch.

According to the present invention, each pipeline 6 is provided with a device 10 for detecting gas leaks to minimise or prevent the possibility of oxygen leaking undetected through a pipeline 6 towards the torch 8 and eventually into the atmosphere where it could, in the case of oxygen, be a potential fire hazard.

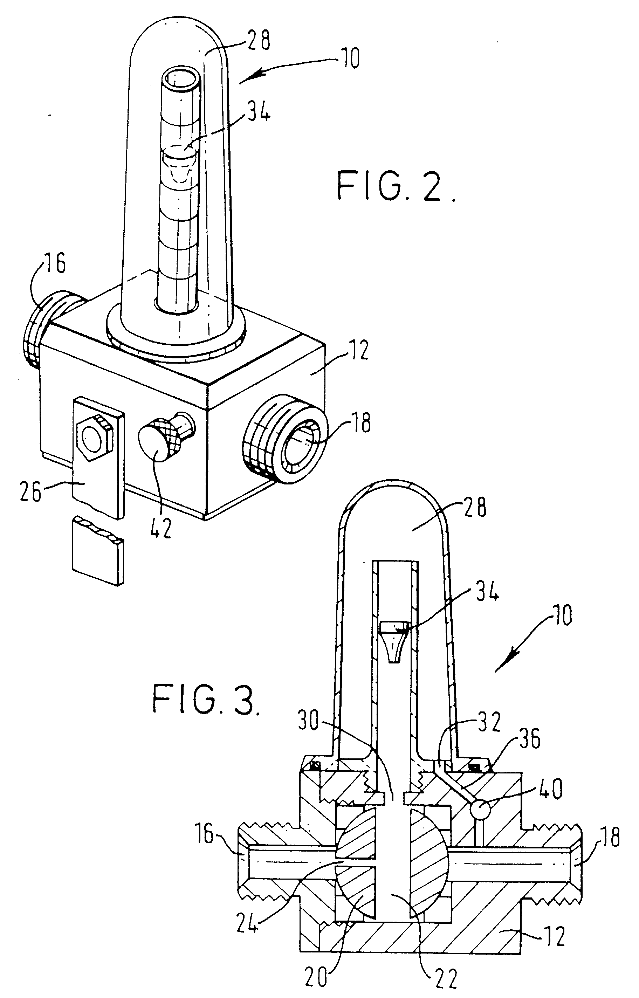

Referring now to Figures 2 and 3, a device 10 for detecting gas leaks includes a housing 12 which is provided with an inlet 16 for connection to a first gas line and spaced therefrom an outlet 18 for connection to a second gas line. In the present embodiment, the device 10 is connected to the first and second gas lines by means of screw connections. As shown most clearly in Figure 3, located within the housing 12 between the inlet 16 and the outlet 18 is a valve member in the form of a sphere 20. The sphere 20 is formed with a main through bore 22 which extends diametrically through the sphere; and a smaller second bore 24 which extends between the surface of the sphere 20 and the main through bore 22. The sphere 20 is movable by means of a handle 26 as will be explained.

Mounted on the housing 12 is a flow meter 28 which has an inlet 30 and an outlet 32. The flow meter 28 is made from glass or clear plastics material and includes a visible free-moving float 34. A passageway 36 extends between the outlet 32 of the flow meter 28 and the outlet 18 of the device 10. A needle valve 40 is located in the passage way 36 which needle valve can be controlled by a rotatable knob 42.

When a torch 8 is being used and oxygen from the pressure vessel 2 is required to flow along the pipelines 4, 6 the handle 26 will be rotated which in turn will rotate the sphere 20 so that the main through bore 22 is aligned with the inlet 16 and the outlet 18. It is evident that gas will then flow directly through the device 10 via the inlet 16 and the outlet 18 unimpeded.

When the torch 8 is no longer in use then the valve associated with the torch 8 will be closed. Subsequently the handle 26 will be turned so that the sphere 20 adopts the orientation illustrated in Figure 3. Should there be a leak down stream of the device 10 then gas will flow through the inlet 16 and be diverted by the second bore 24 and the main through bore 22 into the flow meter 28 via inlet 30. The position of the float 34 will give a precise indication of the flow rate of gas flowing through the flow meter 28. After flowing through the flow meter 28 the gas will leave via the outlet 32 and will then leave device 10 via the outlet 18. Thus it will be apparent from the position of the float 34 precisely how much gas is leaking into the atmosphere downstream of device 10.

If there is a desire to close off all flow through the device 10 then the knob 42 can be used to actuate the needle valve 40 which will close off the flow of gas through the passageway 36 between the outlet 32 of the flow meter 28 and the outlet 18.

In this embodiment reference has been made to detecting the leak of gases for example oxygen but the device could be adapted also to detect leaks in systems using liquids.

A particular advantage of the above described embodiment is that is relatively simple to manufacture and therefore economic to use.

## Claims

1. A device 10 for detecting fluid leaks, comprising a housing 12 having an inlet 16 adapted for attachment to a first fluid line and an outlet 18 adapted for attachment to a second fluid line, characterised in that a valve member 20 is located in the housing 12 between the inlet 16 and the outlet 18 and movable between a first position in which the fluid can pass from the inlet 16 through the valve member 20 and towards the outlet 18 and a second position in which the fluid when flowing through the inlet 16 is diverted through a flowmeter 28 before reaching the outlet 18.

2. A device as claimed in claim 1, in which the valve member is in the form of a sphere 20 having a main through bore 22 which, in the first position, is aligned with the inlet 16 and the outlet 18 and a second bore 24 which in the second position allows fluid communication between the inlet 16 and the main through bore 22 which in said second position is aligned with an inlet 30 to the flowmeter 28.

3. A device as claimed in claim 1 or 2, in which a passageway 36 extends from an outlet 32 of the flowmeter 28 towards said outlet 18, said passageway 36 having located therein a valve 40 for controlling the flow of fluid therethrough.

4. A device as claimed in any one of claims 1 to 3, in which the flowmeter 28 is mounted on the housing 12.

5. A device as claimed in any one of claims 1 to 3 in which the fluid is a gas.

6. A gas supply arrangement including a source of gas, a pipeline from said source to an end user device and a gas leak detector device 10 as claimed in claim 5 located in said pipeline.
